# EUROPÄISCHE PATENTANMELDUNG

(11) **EP 1 043 841 A2**
(43) Veröffentlichungstag der Anmeldung: **11.10.2000**
(21) Anmeldenummer: 00106162.1
(22) Anmeldetag: 21.03.2000
(51) Int. Cl.: H04B 1/10, G01S 5/02

(54) **Vorrichtung zur drahtlosen Datenübertragung**

(30) Priorität: 06.04.1999 DE 19915359
(71) Anmelder: Siemens Nixdorf Retail and Banking Systems GmbH, 33106 Paderborn (DE)
(72) Erfinder: Von der Lippe, Carsten, 33102 Paderborn (DE)

(57) **Zusammenfassung**

Die Erfindung bezieht sich auf eine Vorrichtung zur drahtlosen Datenübertragung zwischen einem stationären Datenverarbeitungsgerät und einem tragbaren Datenverarbeitungsgerät, wobei das stationäre Datenverarbeitungsgerät eine zentrale Steuereinheit, eine Anzahl von Peripherieeinheiten und eine Kommunikationsschnittstelle mit einer Sendeeinheit und mit einer Empfangseinheit umfaßt und wobei das tragbare Datenverarbeitungsgerät eine Steuereinheit, einen Speicher, eine Anzeigeeinheit und eine Kommunikationsschnittstelle mit einer Sende- und Empfangseinheit umfaßt, wobei die Empfangseinheit (14) mindestens des einen Datenverarbeitungsgeräts (1) eine Mehrzahl von Datenempfangselementen aufweist, die auf einer Empfangsfläche verteilt angeordnet sind, und die Empfangseinheit (14) derart mit einer Positioniersignalisierungseinheit (23) gekoppelt ist, daß das tragbare Gerät (2) in Abhängigkeit von Positioniersignalen in eine Datenübertragungs-Sollage bringbar ist.

## Beschreibung

Die Erfindung betrifft eine Vorrichtung zur drahtlosen Datenübertragung zwischen einem stationären Datenverarbeitungsgerät und einem tragbarem Datenverarbeitungsgerät, wobei das stationäre Datenverarbeitungsgerät eine zentrale Steuereinheit, eine Anzahl von Peripherieeinheiten und eine Kommunikationsschnittstelle mit einer Sendeeinheit und mit einer Empfangseinheit umfaßt und wobei das tragbare Datenverarbeitungsgerät eine Steuereinheit, einen Speicher, eine Anzeigeeinheit und eine Kommunikationsschnittstelle mit einer Sende- und Empfangseinheit umfaßt.

Der Einsatz von tragbaren Datenverarbeitungsgeräten, beispielsweise von einem tragbaren Rechner oder einem elektronischen Zeitplaner, findet eine immer größere Verbreitung. Zur Datenübertragung zu oder von einem stationären Datenverarbeitungsgerät, insbesondere eines Personalcomputers, weisen die tragbaren und stationären Datenverarbeitungsgeräte jeweils eine Kommunikationsschnittstelle auf, die Schaltungen aufweist zur Generierung eines festgelegten Datenübertragungsprotokolls. Beispielsweise kann eine serielle Schnittstelle, insbesondere eine V24-Schnittstelle, vorgesehen sein, wobei nach Verbindung der entsprechenden Kommunikationsschnittstellen eine Datenübertragung erfolgen kann. Die leitungsgebundene Datenübertragung ist relativ sicher und zuverlässig. Jedoch ist der Aufwand infolge von Bereitstellung und Kontaktierung einer Steckverbindung relativ aufwendig, wenn nur eine kleine Menge von Daten übertragen werden soll.

Es ist bereits aus dem Stand der Technik bekannt, sowohl das stationäre als auch das tragbare Datenverarbeitungsgerät mit einer Kommunikationsschnittstelle zur drahtlosen Datenübertragung vorzusehen. Eine solche Schnittstelle weist eine Infrarot-Sende- und eine Infrarot-Empfangseinheit auf. Bei einer drahtlosen Datenübertragung kann es jedoch zu Datenübertragungsfehlern kommen, die in einer Veränderung der Relativlage beispielsweise einer Sendereinheit des tragbaren Datenverarbeitungsgeräts zu einer Empfangseinheit des stationären Datenverarbeitungsgeräts aus einer Datenübertragungs-Sollage begründet ist. Hierdurch kann eine Wiederholung der Datenübertragung erforderlich sein, wodurch eine zusätzliche Beanspruchung der Stromversorgungseinheit des tragbaren Datenverarbeitungsgeräts eintritt. Zwar kann eine lagerechte Positionierung des tragbaren Datenverarbeitungsgeräts durch Anlage des tragbaren Datenverarbeitungsgeräts an einer Anlageschiene des stationären Datenverarbeitungsgeräts erfolgen. Nachteilig an der mittels mechanischer Führung vorgenommmenen Positionierung des tragbaren Datenverarbeitungsgeräts ist, daß die Positionierung abhängig ist von den Bauformen der Datenverarbeitungsgeräte, insbesondere des tragbaren Datenverarbeitungsgeräts.

Aufgabe der vorliegenden Erfindung ist es daher, eine Vorrichtung zur drahtlosen Datenübertragung zwischen einem stationären Datenverarbeitungsgerät und einem tragbaren Datenverarbeitungsgerät derart weiterzubilden, daß eine sichere, zuverlässige und universelle Datenübertragung gewährleistet ist.

Zur Lösung dieser Aufgabe ist die Erfindung in Verbindung mit dem Oberbegriff des Patentanspruchs 1 dadurch gekennzeichnet, daß die Empfangseinheit mindestens des einen Datenverarbeitungsgeräts eine Mehrzahl von Datenempfangselementen aufweist, die auf einer Empfangsfläche verteilt angeordnet sind, und daß die Empfangseinheit derart mit einer Positioniersignalisierungseinheit gekoppelt ist, daß das tragbare Gerät in Abhängigkeit von Positioniersignalen in eine Datenübertragungs-Sollage bringbar ist.

Der Vorteil der erfindungsgemäßen Vorrichtung besteht insbesondere darin, daß die Wahrscheinlichkeit einer sicheren Datenübertragung von einem tragbaren Datenverarbeitungsgerät zu einem stationären Datenverarbeitungsgerät oder umgekehrt wesentlich erhöht wird. Grundgedanke der Erfindung ist es, das empfangende Datenverarbeitungsgerät mit einer Mehrzahl von Datenempfangselementen auszustatten, so daß bei Abweichung der räumlichen Ausrichtung des sendenden Datenverarbeitungsgeräts zu dem empfangenden Datenverarbeitungsgerät gleichwohl ein Signal detektierbar und auswertbar ist.

Die Handhabung des tragbaren Datenverarbeitungsgeräts wird insoweit erleichtert, als der Benutzer während der Datenübertragung nicht seine ausschließliche Aufmerksamkeit auf die Einhaltung der Datenübertragungs-Sollage des tragbaren Datenverarbeitungsgeräts gerichtet haben muß.

Vorteilhaft kann durch eine konvexe Ausbildung einer Empfangsfläche der Empfangseinheit der Raumwinkel, innerhalb dessen eine Datenübertragung möglich ist, wesentlich erhöht werden.

Durch das Vorsehen einer Positioniersignalisierungseinheit kann dem Benutzer signalisiert werden, ob er sich noch in dem zulässigen Datenübertragungs-Raumwinkelbereich befindet bzw. welche Korrekturmaßnahmen er vornehmen muß, um wieder in die Datenübertragungs-Sollage zu gelangen.

Nach einer Ausgestaltung der Erfindung weist die Empfangseinheit ein zentrales Datenempfangselement und eine Mehrzahl von äußeren Datenempfangselementen auf. Die äußeren Datenempfangselemente sind in einem konstanten Abstand zu dem zentralen Datenempfangselement angeordnet. Dabei dient das zentrale Datenempfangselement in der Mitte als Referenzpunkt zur Ausrichtung des tragbaren Datenverarbeitungsgeräts und korrespondiert infolgedessen zur Datenübertragungs-Sollage desselben. Die äußeren Datenempfangselemente erfassen Signale bei Abweichung der Datenübertragungs-Sollage und ermöglichen insbesondere im Zusammenwirken mit korrespondierenden Anzeigeelementen einer Anzeigeeinheit die Signalisierung einer Korrektur der Relativlage des tragbaren Datenverarbeitungsgeräts zu dem stationären Datenverarbeitungsgerät.

Die Positioniersignalisierung kann auf optischem oder akustischem Wege erfolgen. Vorzugsweise erfolgt sie optisch durch Anzeige von Anzeigeelementen, die zugleich die Richtung angeben, in der das tragbare Datenverarbeitungsgerät räumlich bewegt werden muß, um in die Datenübertragungs-Sollage zu gelangen.

Nach einer Ausführungsform der Erfindung ist die Positioniersignalisierungseinheit in dem stationären Datenverarbeitungsgerät integriert, so daß der Energieverbrauch des tragbaren Datenverarbeitungsgeräts durch diese Bedienerführung nicht erhöht wird.

Nach einer bevorzugten Ausführungsform weist ausschließlich die Empfangseinheit des stationären Datenverarbeitungsgeräts die Mehrzahl von Datenempfangselementen auf, so daß bei Datenübertragung von dem stationären Datenverarbeitungsgerät zu dem tragbaren Datenverarbeitungsgerät kein erhöhter Stromverbrauch infolge des Betriebs mehrerer Datenempfangselemente gegeben ist. Diese Ausführungsform ermöglicht insbesondere eine für das tragbare Datenverarbeitungsgerät energiesparende und zugleich sichere Datenübertragung.

Nach einer Weiterbildung der Erfindung weist die Empfangseinheit Mittel zum Mischen von durch die Datenempfangselemente empfangenen Signale auf, die ein resultierendes Signal erzeugen, welches in einer Steuereinheit ausgewertet werden kann. Vorzugsweise wird das resultierende Signal durch den höchsten Signalpegel eines Datenempfangselementes gebildet.

Weitere Vorteile der Erfindung ergeben sich aus den weiteren Unteransprüchen.

Zwei Ausführungsbeispiele der Erfindung werden nachfolgend anhand der Zeichnungen näher erläutert.

Es zeigen:
- Figur 1: ein Blockschaltbild der erfindungsgemäßen Vorrichtung nach einem ersten Ausführungsbeispiel,
- Figur 2: ein Blockschaltbild der erfindungsgemäßen Vorrichtung nach einem zweiten Ausführungsbeispiel,
- Figur 3: eine schematische Darstellung der exemplarischen Anordnung von Datenempfangselementen einer Empfangseinheit und Anzeigeelementen einer Positio-niersignalisierungseinheit nach einem ersten Ausführungsbeispiel und
- Figur 4: eine schematische Darstellung der exemplarischen Anordnung von Datenempfangselementen einer Empfangseinheit und Anzeigeelementen einer Positioniersignalisierungseinheit nach einem zweiten Ausführungsbeispiel.

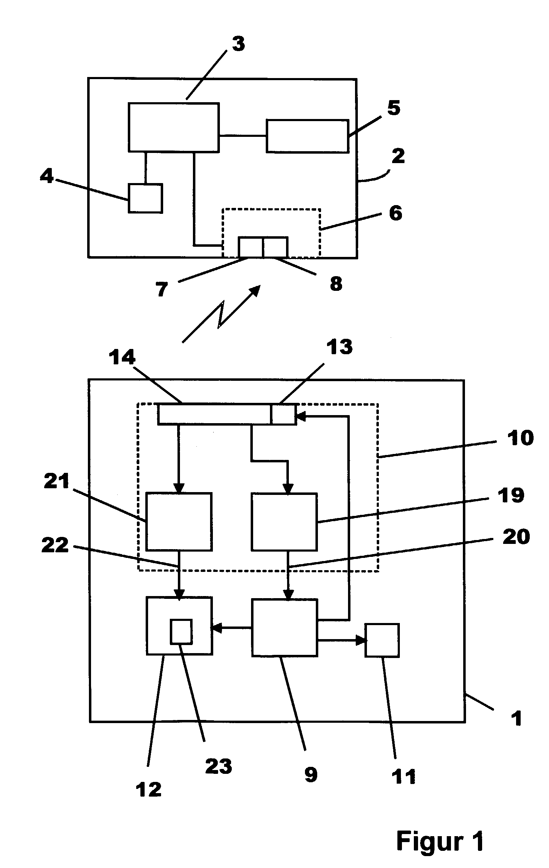

In Figur 1 ist eine Vorrichtung zur drahtlosen Datenübertragung zwischen einem stationären Datenverarbeitungsgerät, das als Kontoauszugsdrucker 1 ausgebildet ist, und einem elektronischen Zeitplaner 2 als tragbares Datenverarbeitungsgerät dargestellt.

Der Zeitplaner 2 weist einen Mikroprozessor 3, einen Speicher 4, ein LC-Display 5 sowie eine Kommunikationsschnittstelle 6 auf. Die Kommunikationsschnittstelle 6 weist eine Sendeeinheit 7 und eine Empfangseinheit 8 auf. Der Mikroprozessor 3 dient als Steuereinheit und ermöglicht die Durchführung der vorgegebenen Funktionen, wie Terminplanung, Kalender, mathematische Funktionen etc.. Die Kommunikationsschnittstelle 6 weist zum einen eine nicht dargestellte serielle V24-Schnittstelle auf, mittels der eine drahtgebundene Datenübertragung zwischen dem Zeitplaner 2 und dem Kontoauszugsdrucker 1 ermöglicht wird.

Zur drahtlosen Kommunikation zwischen dem Zeitplaner 2 und dem Kontoauszugsdrucker 1 ist die Sendeeinheit 7 als Infrarot-Sendeeinheit und die Empfangseinheit 8 als Infrarot-Empfangseinheit ausgebildet. Alternativ kann neben der Datenübertragung mittels Infrarotstrahlung auch eine Datenübertragung in einem anderen Frequenzbereich, insbesondere in einem Frequenzbereich des Ultraschalls bzw. des sichtbaren Lichtes, erfolgen.

Der Kontoauszugsdrucker 1 besteht im wesentlichen aus einer zentralen Steuereinheit 9, bestehend aus einem nicht dargestellten Mikroprozessor und einem Speicher, einer Anzahl von Peripherieeinheiten und einer Kommunikationsschnittstelle 10. Als Peripherieeinheit ist zum einen ein Drucker 11 und zum anderen ein Display 12 vorgesehen. Die Kommunikationsschnittstelle 10 weist eine Sendeeinheit 13 und eine Empfangseinheit 14 für die Infrarot-Datenübertragung auf. Die Sendeeinheit 13 besteht wie die Sendeeinheit 7 bzw. die Empfangseinheit 8 des Zeitplaner 2 aus einem einzigen Infrarotelement als Datenempfangselement 15. Im Unterschied dazu weist die Empfangseinheit 14 eine Mehrzahl von Datenempfangselementen 15 auf.

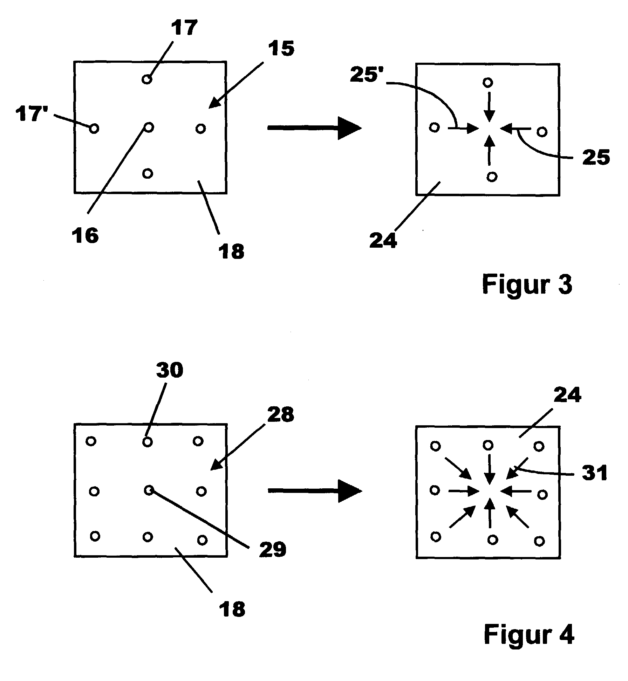

Wie aus Figur 3 ersichtlich ist, kann nach einem ersten Ausführungsbeispiel der Empfangseinheit 14 ein zentrales Datenempfangselement 16 und vier im gleichen Abstand zu dem zentralen Datenempfangselement 16 angeordnete äußere Datenempfangselemente 17 auf einer empfangsfläche 18 vorgesehen sein. Die äußeren Datenempfangselemente 17 weisen zu den benachbarten äußeren Datenempfangselementen 17 einen konstanten Abstand auf, wobei zwei gegenüberliegende äußere Datenempfangselemente 17 in einer horizontalen Ebene bzw. in einer vertikalen Ebene liegen. Bei einer Datenübertragung von dem Zeitplaner 2 zu dem Kontoauszugsdrucker 1 ist die Sendeeinheit 7 des Zeitplaners 2 auf das zentrale Da-tenempfangselement auszurichten. Bei einer Abweichung von dieser Datenübertragungs-Sollage des Zeitplaners 2 spricht in Abhängigkeit von der Richtung der Abweichung ein äußeres Datenempfangselement 17 an, dessen Signalpegel größer ist als der Signalpegel des zentrale Datenempfangselements 16. Würde beispielsweise während der Datenübertragung eine Abweichung der Lage des Zeitplaners 2 nach links erfolgen, würde dies in der Empfangseinheit 14 infolge eines hohen Signalpegels des äußeren Datenempfangselements 17' erfaßt werden. Das empfangene Signal kann somit zu der zentralen Steuereinheit 9 übertragen werden.

Zur Verarbeitung der empfangenen Signale ist die Empfangseinheit 14 mit einer Mischeinheit 19 verbunden, in der aus den eingangsseitig anliegenden Signalen der Datenempfangselemente 15 ein resultierendes Signal 20 erzeugt wird. Die Mischeinheit 19 weist vorzugsweise eine Schaltung auf, die aus den empfangenen Signalen ein Signal mit höchstem Signalpegel selektiert. Alternativ könnten die empfangenen Signale auch aufsummiert werden. Diese Verarbeitung eignet sich jedoch nicht für die Übertragung von digitalisierten Datenübertragungsprotokollen.

Das resultierende Signal 20 kann dann als Nutzsignal in der zentralen Steuereinheit 9 ausgewertet werden. Beispielsweise könnte ein Zugriff auf die Kontendaten des Benutzers erfolgen, um sie dann über die Sendeeinheit 13 an die Empfangseinheit 8 des Zeitplaners 2 zu übertragen. Die Empfangseinheit 14 weist vorzugsweise eine Verstärkerschaltung auf, so daß die empfangenen Signale mit ausreichend hohem Pegel sowohl der Mischeinheit 19 als auch einer Vergleichsschaltung 21 bereitgestellt werden können. Die Vergleichsschaltung 21 weist Mittel zum Vergleichen der von den Datenempfangselementen 15 empfangenen Signale auf, so daß Steuersignale 22 gebildet werden, die eine Positioniersignalisierungseinheit 23 beaufschlagen.

Die Positioniersignalisierungseinheit 23 kann als akustische Einheit oder als optische Anzeigeeinheit ausgebildet sein und entsprechende akustische oder optische Positioniersignale abgeben, so daß der Benutzer nach Art einer Führung den Zeitplaner 2 in die Datenübertragungs-Sollage bewegen kann. Im vorliegenden Ausführungsbeispiel ist die Positioniersignalisierungseinheit 23 als Anzeigeeinheit in dem ohnehin vorhandenen Display 12 integriert. Die Anzeigeeinheit 23 weist eine Anzeigefläche 24 auf, die eine zu der Anzahl der äußeren Datenempfangselementen 17 korrespondierende Anzahl von Anzeigeelementen 25 aufweist. Wie aus Figur 3 ersichtlich ist, sind die Anzeigeelemente 25 als visualisierende Anzeigepfeile ausgebildet, wobei jeder Anzeigepfeil 25 einem äußeren Datenempfangselement 17 zugeordnet ist. Beispielsweise korrespondiert der linke Anzeigepfeil 25' zu dem linken äußeren Datenempfangselement 17'. Bei Abweichung der Lage des Zeitplaners 2 von der Datenübertragungs-Sollage nach links spricht zum einen das äußere Datenempfangselement 17' an. Zum anderen wird mittels in der Vergleichsschaltung 21 angeordneter Komparatoren der höchste Signalpegel festgestellt. Im vorliegenden Beispiel würde das linke Anzeigeelement 25' mittels des Steuersignals 22 angesteuert werden, so daß ein Pfeil in Richtung des Mittelpunktes der Anzeigefläche 24 angezeigt wird. Die weiteren Anzeigeelemente 25 werden nicht betätigt und bleiben unsichtbar. Durch das Betätigen des Anzeigeelementes 25' wird dem Benutzer signalisiert, daß er den Zeitplaner 2 in Pfeilrichtung zurückbewegen soll, bis er die Datenübertragungs-Sollage einnimmt. In diesem Zustand wird keines der Anzeigeelemente 25 angezeigt.

Zur Vermeidung einer flackernden Darstellung der Anzeigeelemente 25 weist die Vergleichsschaltung 21 eine Spannungshaltungsschaltung auf, deren Haltezeit auf die Übertragungsfrequenz abgestimmt ist.

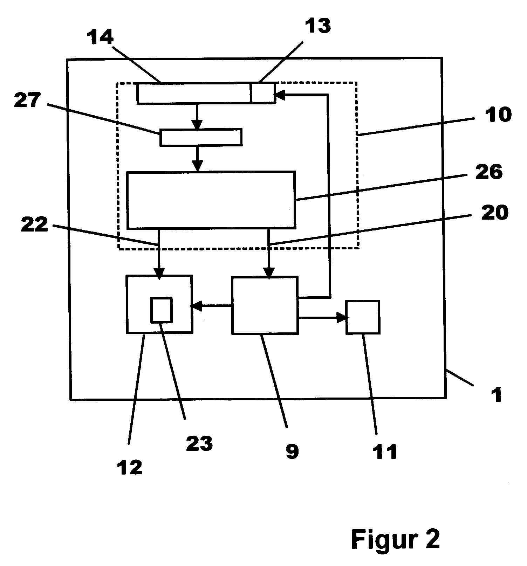

Nach einem zweiten Ausführungsbeispiel gemäß Figur 2 kann die Verarbeitung der von der Empfangseinheit 1 empfangenen Signale auch durch einen Mikrokontroller 26 mit einem Mikroprozessor, einem Festwertspeicher und einem Arbeitsspeicher erfolgen. In Figur 2 sind die mit dem ersten Ausführungsbeispiel übereinstimmenden Bauteile mit den gleichen Bezugsziffern versehen. Zwischen der Empfangseinheit 14 und dem Mikrokontroller 26 ist eine Anpassungsschaltung 27 angeordnet, die einen Verstärker und einen A/D-Wandler aufweist. Die Anpassungsschaltung 27 erzeugt aus den empfangenen Signalen eine digitalisiertes und verstärktes Signal, wobei die Anzahl der Eingänge des Mikrokontrollers 26 zur Anzahl der zumindest äußeren Datenempfangselemente 17 entspricht. Alternativ kann die Vergleichsschaltung 21 auch einen Multiplexer aufweisen, so daß lediglich ein einziges Steuersignal sequenziell dem Mikrokontoller 26 zugeführt wird. Der Mikrokontroller 26 weist in einem Festwertspeicher ein Steuerprogramm auf, mittels dessen das oben beschriebene resultierende Signal 20 bzw. das Steuersignal 22 erzeugbar sind.

Alternativ ist es auch möglich, daß die Positioniersignalisierungseinheit in dem LC-Display 5 des Zeitplaners 2 integriert ist. Zu diesem Zweck muß das Steuersignal 22 der zentralen Steuereinheit 9 bzw. direkt der Sendeeinheit 13 zugeleitet werden, von der aus ein entsprechendes Positioniersteuerprotokoll an die Empfangseinheit 8 des Zeitplaners 2 übertragen wird. Ein entsprechendes Programm in dem Zeitplaner 2 ermöglicht die Anzeige der entsprechenden Positionierungsdaten. Vorteilhaft kann bei dieser Ausführungsform auf die Anzeige mittels leuchtenden Anzeigeelementen, insbesondere von Leuchtdioden, wie im Ausführungsbeispiel gemäß Figur 1 und 2 verzichtet werden.

Nach einer weiteren Ausführungsform gemäß Figur 4 kann die Empfangsfläche 18 auch matrixartig verteilt angeordnete Datenempfangselemente 28 aufweisen. Ein mittleres Datenempfangselement 29 dient als Ausrichtung für die Datenübertragungs-Sollage. Äußere Datenempfangselemente 30 bilden unter konstantem Abstand benachbarter Datenempfangselemente 30 ein Quadrat. Die zu dieser Empfangfläche 18 korrespondierende Anzeigefläche 24 weist eine zu den äußeren Datenempfangselementen 30 korrespondierende Anzahl von Anzeigeelementen 31 auf, die bei Ansteuerung mittels des Steuersignals 22 als Leuchtpfeile die Richtung der vom Benutzer vorzunehmenden Korrekturbewegung anzeigen. Alternativ können die äußeren Datenempfangselemente 28 auch kreisförmig um das mittlere Datenempfangselement 29 angeordnet sein.

## Patentansprüche

1. Vorrichtung zur drahtlosen Datenübertragung zwischen einem stationären Datenverarbeitungsgerät und einem tragbaren Datenverarbeitungsgerät, wobei das stationäre Datenverarbeitungsgerät eine zentrale Steuereinheit, eine Anzahl von Peripherieeinheiten und eine Kommunikationsschnittstelle mit einer Sendeeinheit und mit einer Empfangseinheit umfaßt und wobei das tragbare Datenverarbeitungsgerät eine Steuereinheit, einen Speicher, eine Anzeigeeinheit und eine Kommunikationsschnittstelle mit einer Sende- und Empfangseinheit umfaßt, **dadurch gekennzeichnet** , daß die Empfangseinheit (14) mindestens des einen Datenverarbeitungsgeräts (1) eine Mehrzahl von Datenempfangselementen (15, 16, 17, 28, 29, 30) aufweist, die auf einer Empfangsfläche (18) verteilt angeordnet sind, und daß die Empfangseinheit (14) derart mit einer Positioniersignalisierungseinheit (23) gekoppelt ist, daß das tragbare Gerät (2) in Abhängigkeit von Positioniersignalen in eine Datenübertragungs-Sollage bringbar ist.

2. Vorrichtung nach Anspruch 1, **dadurch gekennzeichnet** , daß die Empfangseinheit (14) ein zentrales Datenempfangselement (16, 29) und eine Mehrzahl von äußeren Datenempfangselementen (17, 30) aufweist, wobei die äußeren Datenempfangselemente (17) in einem gleichen Abstand zu dem zentralen Datenempfangselement (16) und/oder zu benachbarten äußeren Datenempfangselementen (17) angeordnet sind.

3. Vorrichtung nach Anspruch 1 oder 2, **dadurch gekennzeichnet** , daß die Datenempfangselemente (29, 30) matrixartig auf der Empfangsfläche (18) verteilt angeordnet sind.

4. Vorrichtung nach einem der Ansprüche 1 bis 3, **dadurch gekennzeichnet**, daß vier äußere Datenempfangselemente (17) vorgesehen sind, wobei zwei gegenüberliegende Datenempfangselemente (17) sich in einer vertikalen bzw. einer horizontalen Ebene erstrecken.

5. Vorrichtung nach einem der Ansprüche 1 bis 4, **dadurch gekennzeichnet**, daß die Positioniersigalisierungseinheit (23) als optische Anzeigeeiheit ausgebildet ist mit einer zu der Anzahl zumindest der äußeren Datenempfangselemente (17, 30) korrespondierende Anzahl von Anzeigeelementen (25, 31) , die jeweils mit einem der äußeren Datenempfangselemente (17, 30) gekoppelt sind.

6. Vorrichtung nach einem der Ansprüche 1 bis 5, **dadurch gekennzeichnet** , daß die Relativlage der Anzeigeelemente (25, 31) bezüglich einem Mittelpunkt der Anzeigefläche (24) einerseits zu der Relativlage der äußeren Datenempfangselemente (17, 30) bezüglich des zentralen Datenempfangselements (16) andererseits korrespondiert.

7. Vorrichtung nach einem der Ansprüche 1 bis 6, **dadurch gekennzeichnet**, daß die Anzeigeelemente (25, 31) jeweils pfeilförmig ausgebildet sind mit einer zum Mittelpunkt der Anzeigefläche (24) gerichteten Spitze.

8. Vorrichtung nach einem der Ansprüche 1 bis 7, **dadurch gekennzeichnet**, daß der Empfangseinheit (14) Mittel zum Mischen von durch die Datenempfangselemente (15) empfangene Signalen nachgeordnet sind zum Generieren eines resultierenden Signals (20).

9. Vorrichtung nach einem der Ansprüche 1 bis 8, **dadurch gekennzeichnet**, daß das Mittel zum Mischen der durch die Datenempfangselemente (15) empfangenen Signale als Mischeinheit (19) ausgebildet ist zum Selektieren des von den Datenempfangselementen (15) empfangenen Signals mit dem höchsten Signalpegel.

10. Vorrichtung nach einem der Ansprüche 1 bis 9, **dadurch gekennzeichnet**, daß die Empfangseinheit (14) Mittel zum Vergleichen der von den Datenempfangselementen (15) empfangenen Signale nachgeordnet sind, derart, daß ein Steuersignal (22) in Abhängigkeit vom Signalpegel der jeweiligen Datenempfangselemente (15) zur Ansteuerung der Positioniersignalisierungseinheit (23) generierbar sind.

11. Vorrichtung nach Anspruch 10, **dadurch gekennzeichnet** , daß als Mittel zum Vergleichen eine Vergleichsschaltung (21) mit jeweils den Datenempfangselementen (15) zugeordneten Komparatoren vorgesehen ist.

12. Vorrichtung nach einem der Ansprüche 1 bis 8, **dadurch gekennzeichnet** , daß der Empfangseinheit (14) ein Mikrokontroller (26) nachgeordnet ist, in dem ein resultierendes Signal (20) zur Übertragung an die zentrale Steuereinheit (9) einerseits und in dem das Steuersignal (22) zur Ansteuerung der Anzeigeelemente (25, 31) generierbar ist.

13. Vorrichtung nach Anspruch 12, **dadurch gekennzeichnet** , daß zwischen der Empfangseinheit (14) und dem Mikrokontroller (26) eine Anpassungsschaltung (27) vorgesehen ist zur Bereitstellung von in dem Mikrokontroller (26) verarbeitbaren empfangenen Signalen.
